# EUROPEAN PATENT SPECIFICATION

(11) **EP 3 332 436 B1**
(45) Date of publication and mention of the grant of the patent: **07.10.2020**
(21) Application number: 16833718.6
(22) Date of filing: 02.08.2016
(51) Int. Cl.: H01M 4/139, H01M 4/04, H01M 4/80, H01M 4/525, H01M 10/052, H01M 4/74, H01M 4/131, H01M 4/134, H01M 4/1395, H01M 4/38, H01M 4/66, H01M 4/02, H01M 6/40, H01M 10/0525, H01M 10/0587, H01M 10/04

(54) **MICRO-POROUS BATTERY SUBSTRATE**
MIKROPORÖSES BATTERIESUBSTRAT
SUBSTRAT MICROPOREUX DE BATTERIE

(30) Priority: 03.08.2015 US 201514817184
(43) Date of publication of application: 13.06.2018
(73) Proprietor: Google LLC, Mountain View, CA 94043 (US)
(72) Inventor: HWANG, Tai, Sup, Mountain View, CA 94043 (US); BHARDWAJ, Ramesh, C., Mountain View, CA 94043 (US)
(74) Representative: Williams, Michael David
(86) International application number: PCT/US2016/045102
(87) International publication number: WO 2017/023900

(56) References cited:
- WO-A1-2015/037868
- US-A1- 2007 212 583
- US-A1- 2010 316 903
- US-A1- 2014 106 232
- US-A1- 2014 170 466
- US-A1- 2014 272 558
- US-A1- 2015 147 621
- HAHN R ET AL: "Silicon integrated micro batteries based on deep reactive ion etching and through silicon via technologies", ELECTRONIC COMPONENTS AND TECHNOLOGY CONFERENCE (ECTC), 2012 IEEE 62ND, IEEE, 29 May 2012 (2012-05-29), pages 1571-1577, XP032210798, DOI: 10.1109/ECTC.2012.6249045 ISBN: 978-1-4673-1966-9

## Description

### BACKGROUND

Batteries that include lithium metal have a higher theoretical energy density as compared to other batteries that include alkaline or nickel-metal-hydride materials. However, lithium-containing batteries have not realized their full potential due to various challenges such as poor cycle performance and safety concerns. Accordingly, a need exists to reduce loss of Li-metal due to irreversible surface reactions during charge/discharge, reduce dendritic growth at the anode/current collector interface during charging, and reduce surface expansion/contraction due to non-uniform plating of lithium.

PCT patent application publication no. WO 2015/037868 describes a lithium electrode, and a lithium secondary battery comprising the same and, more particularly, to a lithium electrode comprising: a porous metallic current collector; and a lithium metal inserted into a pore formed on the metallic current collector, and to a lithium secondary battery comprising the lithium electrode.

US patent application publication no. US2014/0272558 describes an electrode for a lithium-based secondary electrochemical device which includes a current collector. The current collector includes a substrate having a surface defining a plurality of pores therein, and a lithium powder disposed within each of the plurality of pores. In addition, the electrode includes a cured film disposed on the current collector and formed from an electrically-conductive material. A lithium-based secondary electrochemical device including the electrode, and a method of forming the electrode are also disclosed.

HAHN R ET AL: "Silicon integrated micro batteries based on deep reactive ion etching and through silicon via technologies", ELECTRONIC COMPONENTS AND TECHNOLOGY CONFERENCE (ECTC), 2012 IEEE 62ND, IEEE, 29 May 2012 (2012-05-29), pages 1571-1577 describes thin film micro-batteries having a "side by side" arrangement of anode and cathode side by side on a substrate, with a spacer between the electrodes and an electrolyte disposed on top of both electrodes such as to connect them.

### SUMMARY

In accordance with different aspects of the disclosure, there are provided a method of manufacturing a battery as recited in claim 1 of the accompanying claims and a battery as recited in claim 6 of the accompanying claims.

A battery includes a substrate, a cathode, and an electrolyte. The substrate may be micro-porous. That is, a surface of the substrate includes a plurality of pores, which may include voids, channels, spaces, and/or surface texture. The substrate is configured to house lithium metal. During charge and discharge cycles, the lithium metal may be exchanged between the lithium-containing substrate and the cathode via the electrolyte. In such a scenario, the substrate may act as a lithium-containing anode as well as an anode current collector.

In a first example, a battery is provided. The battery includes a substrate, a cathode, and an electrolyte. The substrate includes a first surface having a plurality of pores. The plurality of pores is configured to house lithium metal. The electrolyte is disposed between the first surface of the substrate and the cathode and is configured to reversibly transport lithium ions via diffusion between the plurality of pores and the cathode.

In a second example, a method of manufacturing a battery is provided. The method includes forming a substrate having a first surface, the first surface having a plurality of pores. The plurality of pores is configured to house lithium metal. The method also includes incorporating lithium metal into at least a portion of the plurality of pores. The method further includes forming an electrolyte disposed between the first surface of the substrate and a cathode. The electrolyte is configured to reversibly transport lithium ions via diffusion between the substrate and the cathode. The method yet further includes forming the cathode.

Other aspects, embodiments, and implementations will become apparent to those of ordinary skill in the art by reading the following detailed description, with reference where appropriate to the accompanying drawings.

### BRIEF DESCRIPTION OF THE FIGURES

Figure 1 illustrates several pore shapes and substrates, according to several example embodiments.
Figure 2 illustrates several views of a substrate, according to an example embodiment.
Figure 3 illustrates an exploded view of a battery, according to an example described herein.
Figure 4 illustrates a method, according to an example described herein.
Figure 5A illustrates battery manufacturing scenario, according to an example.
Figure 5B illustrates battery manufacturing scenario, according to an example.
Figure 5C illustrates battery manufacturing scenario, according to an example.
Figure 5D illustrates battery manufacturing scenario, according to an example.
Figure 5E illustrates battery manufacturing scenario, according to an example.
Figure 6A illustrates battery manufacturing scenario, according to an example embodiment.
Figure 6B illustrates battery manufacturing scenario, according to an example embodiment.
Figure 6C illustrates battery manufacturing scenario, according to an example embodiment.
Figure 6D illustrates battery manufacturing scenario, according to an example embodiment.
Figure 6E illustrates battery manufacturing scenario, according to an example embodiment.
Figure 6F illustrates battery manufacturing scenario, according to an example embodiment.

### DETAILED DESCRIPTION

### I. Overview

The present disclosure describes a battery having a micro-porous current collector or substrate that is configured to incorporate lithium metal within its pores. As such, in some cases, a specific anode material (such as graphite or silicon) may not be needed. That is, the micro-porous substrate may serve joint functions as an anode (e.g. a reservoir of lithium metal) and as a high-conductivity current collector.

The micro-porous substrate may improve exchange of Li-metal near the anode/collector interface. That is, the porous substrate structure may increase the volume within which lithium may be incorporated in the current collector. As a possible result, battery performance may be improved due to higher lithium diffusion rates, especially over the cycle life of the battery. Accordingly, the disclosure may enable lithium ion batteries to provide higher efficiency, higher power density, and/or better cycle life.

In an example embodiment, the micro-porous substrate is a metal, such as copper or nickel. For instance, the metal may be electrochemically stable with lithium. Additionally or alternatively, the micro-porous substrate may include another electrically-conductive material. For example, the electrically-conductive material may include a conductive polymer or carbon nanotubes. Other porous, electrically-conductive materials are contemplated herein. In some embodiments, the micro-porous portion of the substrate may be 20-30 micrometres thick. However, other thicknesses are possible.

The pores within the substrate may be spherical in shape, although other shapes are possible. For example, the pores may be cylindrical, random, pseudo-random, or another shape. The pores may have a regular or irregular spacing. The pores may be arranged in an array, such as in a hexagonal close-pack, square, linear, or another array arrangement. For example, a plurality of spherical pores may be arranged in a square lattice with a center-to-center spacing of approximately 100 micrometres. The square lattice may be repeated as a plurality of stacked layers of pores within the micro-porous substrate.

In some embodiments, the porous substrate may be sponge-like. Additionally or alternatively, the substrate may include a micro-porous portion and a solid, non-porous portion. In an example embodiment, the micro-porous substrate may include a mesh material. In other embodiments, the entire substrate may be micro-porous.

Lithium may be introduced into the micro-porous substrate via a pre-lithiation process. The pre-lithiation process may include various ways to incorporate lithium metal into the micro-porous substrate. In an example embodiment, lithium may be electroplated into the pores using an electrochemical plating process. In such a scenario, the micro-porous substrate may be introduced into a plating bath. The plating bath may include a liquid solution that includes lithium metal and/or lithium-containing compounds. The lithium may be plated into the pores of the micro-porous substrate via standard electroplating or electroless plating.

In an alternative embodiment, pre-lithiation may include evaporation of lithium into the micro-porous substrate. Yet further, pre-lithiation may include solid lithium metallic particle (SLMP) deposition onto the micro-porous substrate. Other ways of introducing lithium into the pores of the micro-porous substrate are contemplate herein.

The micro-porous substrate may be formed using a variety of manufacturing methods. For example, the substrate material, which may be a metal such as copper or nickel, may be oxidized in a heated oxygen environment, such as an oxidation tube furnace. Following oxidation, the pores in the substrate material may be etched via wet or dry etching. In an example embodiment, the oxidized substrate may be etched using hydrofluoric (HF) acid and/or sulfuric acid. Alternatively, the oxidized substrate may be dry etched using, for example, a reactive ion etch (RIE) system.

In some manufacturing processes, an oxidation step need not be used. For example, the substrate may include a plurality of defects, which may be original to the substrate or artificially added to the substrate. In such a scenario, the porous substrate may be formed by etching, e.g. a wet chemical etch.

While the above examples include "top-down" methods for forming the micro-porous substrate (e.g. by removing bulk metal material), "bottom-up" methods are also possible within the scope of this disclosure. Namely, additional or alternative manufacturing processes may include forming the micro-porous substrate with additive material deposition. For example, the micro-porous structure may be formed using a 3-D printer, seeded and/or pre-patterned electroplating, patterned metal evaporation, focused ion beam (FIB), electrospinning, or other additive material deposition techniques.

It is understood that many other manufacturing processes are operable to provide metal materials having holes, pores, texture, or other physical patterning. All such manufacturing processes are contemplated herein.

The batteries and manufacturing methods described herein may be applied to a variety of battery chemistries and battery types. For example, the battery may be a thin film-type battery or a jelly roll-type battery. Furthermore, the anode may include lithium metal and the cathode may include lithium cobalt oxide (LiCoO₂ or LCO).

### II. Example Micro-porous Substrates and Batteries

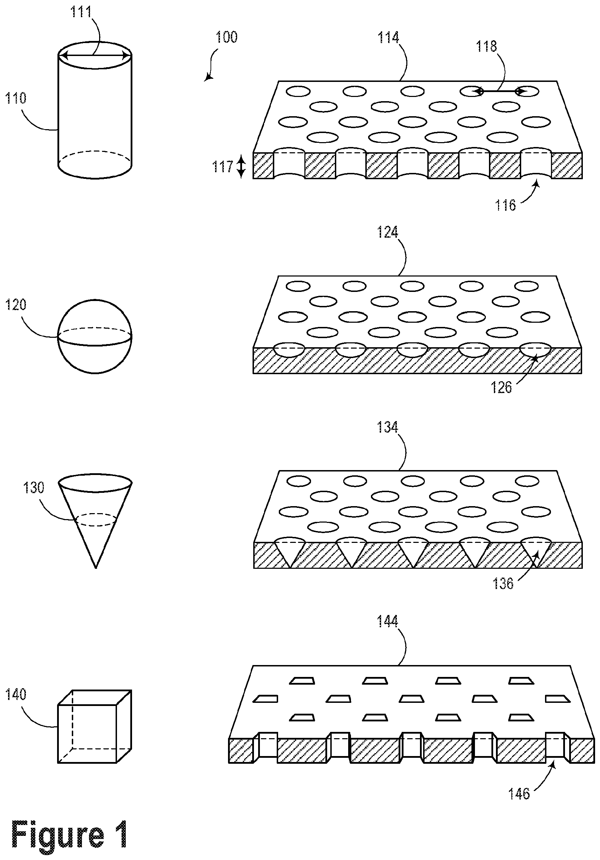

Figure 1 illustrates several pore shapes and substrates 100, according to several example embodiments. A substrate includes a plurality of pores, which may be voids, channels, texture, and/or spaces within the substrate material. The plurality of pores may have a variety of different shapes. The substrate material may be a metal such as copper or nickel. Other materials are contemplated, such as conductive materials that are not substantially reactive with lithium metal.

In an example embodiment, a substrate 114 may include a plurality of cylindrically-shaped pores 116. A cylindrically-shaped pore 110 may have a pore diameter 111 of 1-10 micrometres; however other pore diameters are possible. In such a scenario, the cylindrically-shaped pore 110 may have a height equal to a substrate thickness 117. In other embodiments, the height of the cylindrically-shaped pore 100 may be less than the substrate thickness 117. The substrate thickness 117 may be 10-60 micrometres; however other substrate thicknesses are possible. The cylindrically-shaped pores 116 may be separated by a center-to-center pore spacing 118 of 10-200 micrometres.

In another example embodiment, a substrate 124 may include a plurality of spherically-shaped or hemispherically-shaped pores 126. A hemispherically-shaped pore 120 may have a pore diameter of 1-10 micrometres; however other pore diameters are possible.

In yet another example embodiment, a substrate 134 may include a plurality of cone-shaped pores 136. A cone-shaped pore 130 may have a pore diameter of 1-10 micrometres at its widest point; however other pore diameters are possible.

In a further example embodiment, a substrate 144 may include a plurality of square- or rectangular-shaped pores 146. A square- or rectangular shaped pore 140 may have a pore side length of 1-10 micrometres.

The pore shapes described herein may be arranged in a variety of regular or irregular arrangements. For example, the pores may be arranged in a hexagonal close-packed configuration along a surface of the substrate. Alternatively, the pores may be arranged in a square lattice or another regular arrangement. Additionally or alternatively, the pores may be arranged in a random configuration along the surface of the substrate.

While Figure 1 illustrates arrays of pores arranged along a single layer on the substrate, multiple layers of pores are possible. For example, a substrate may include two, four, or ten layers of pores, or more. The layers of pores may be arranged with a fixed period (e.g. 100 micrometre layer thickness), or without a fixed period (e.g. pseudo-random sponge-like arrangement).

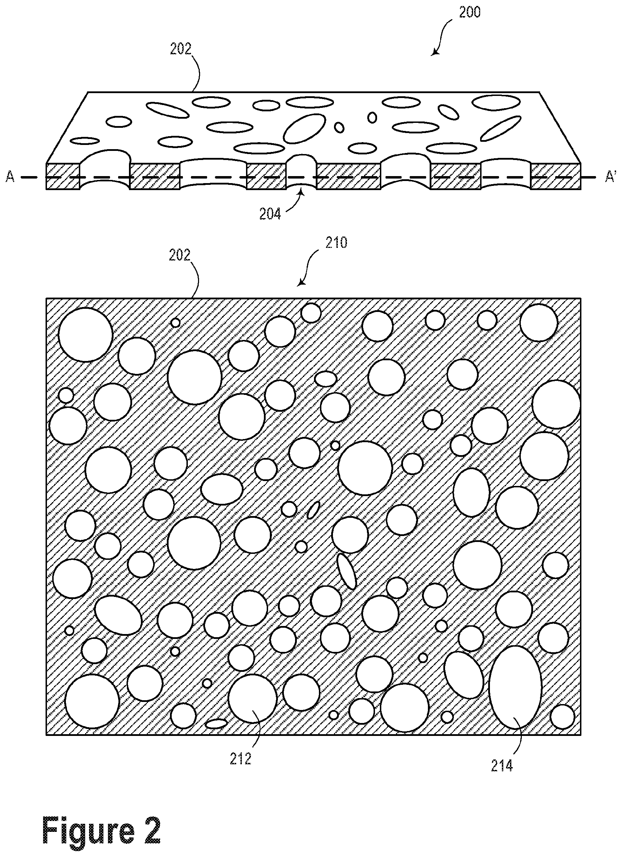

Figure 2 illustrates several views of a substrate 202, according to an example embodiment. An oblique angle view 200 includes a substrate with a plurality of pores 204. The pores 204 may each have a random shape, size, and placement.

A cross-sectional view 210 along line A-A' illustrates the substrate 202 as having a plurality of pores. For example, the pores may have a circular cross-section 212 and/or an elliptical cross-section 214. In some embodiments, the plurality of pores in the substrate 202 may be similar to a sponge, coral, steel wool, mesh, or another type of porous material.

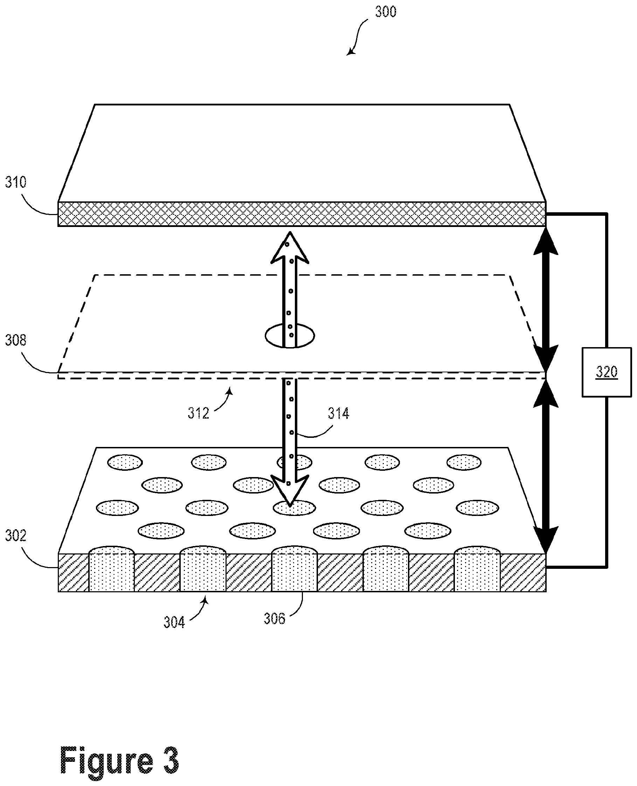

Figure 3 illustrates an exploded view of a battery 300, according to an example described herein. The battery 300 includes a substrate 302. As described elsewhere herein, the substrate 302 may include a metal, such as copper (Cu), nickel (Ni), or an alloy thereof. Other materials are contemplated. The substrate 302 has a plurality of pores 304. The plurality of pores 304 may include pores of random size and shape. Alternatively or additionally, the plurality of pores 304 may include pores with a given shape, density, and location. At least a portion of the plurality of pores 304 is filled at least partially with lithium metal 306.

The battery 300 may further include a separator 308 and a cathode 310. The separator 308 may include a material configured to maintain a physical separation between the substrate 302 and cathode 310. For example, the separator 308 may be a fibrous or polymeric membrane. Furthermore, the battery 300 includes an electrolyte 312, which may be present in and/or around the separator 308.

The cathode 310 may include a material such as lithium cobalt oxide (LiCo02, or LCO). Additionally or alternatively, the cathode 310 may include lithium manganese oxide (LiMn2O4, or LMO), lithium nickel manganese cobalt oxide (LiNixMnyCozO2, or NMC), or lithium iron phosphate (LiFePO4). Other cathode materials are possible. Furthermore, the cathode may be coated with aluminum oxide and/or another ceramic material, which may allow the battery to operate at higher voltages and/or provide other performance advantages.

In example embodiments, LCO may be deposited using RF sputtering or PVD, however other deposition techniques may be used to form the cathode 310. The deposition of the cathode 310 may occur as a blanket over the entire substrate. A subtractive process of masking and etching may remove cathode material where unwanted. Alternatively, the deposition of the cathode 310 may be masked using a photolithography-defined resist mask.

In some embodiments, the battery 300 may include a cathode current collector (not illustrated). For example, the cathode current collector may include a material that functions as an electrical conductor. Furthermore, the cathode current collector may be configured to be block lithium ions and various oxidation products (H2O, O2, N2, etc.). In other words, the cathode current collector may include materials that have minimal reactivity with lithium. For example, the cathode current collector may include one or more of: Au, Ag, Al, Cu, Co, Ni, Pd, Zn, and Pt. Alloys of such materials are also contemplated herein. In some embodiments, an adhesion layer material, such as Ti may be utilized. In other words, the cathode current collector may include multiple layers, e.g. TiPtAu. Other materials are possible to form the cathode current collector. For example, the cathode current collector may be formed from carbon nanotubes and/or metal nanowires.

The cathode current collector may be deposited using RF or DC sputtering of source targets. Alternatively, PVD, electron beam-induced deposition or focused ion beam deposition may be utilized to form the cathode current collector.

The electrolyte 312 is disposed between the cathode 310 and the substrate 302. The electrolyte 312 may include a material such as lithium phosphorous oxynitride (LiPON). Additionally or alternatively, the electrolyte 312 may include a flexible polymer electrolyte material. Yet further, the electrolyte 312 may include a liquid electrolyte, such as a solution including a lithium salt such as LiPF6 or LiBF4 and an organic solvent such as ethylene carbonate (EC), dimethyl carbonate (DMC), and/or diethyl carbonate (DEC). Other electrolyte materials are possible.

Generally, the electrolyte 312 may be configured to permit lithium ion conduction between the substrate 302 and the cathode 310. Namely, electrolyte 312 may be configured to reversibly transport lithium ions via diffusion between the plurality of pores 304 in the substrate 302 and the cathode 310. In an example embodiment, the LiPON material may allow lithium ion transport while preventing a short circuit between the substrate 302 and the cathode 310.

In an example embodiment, the cathode 310 and the substrate 302 may be electrically coupled to a circuit 320. That is, the battery 300 may generally provide power to the circuit 320. In some cases, circuit 320 may provide power to battery 300 so as to recharge it.

It should be understood that Figure 3 illustrates the battery 300 in a "single cell" configuration and that other configurations are possible. For example, the battery 300 may be connected in a parallel and/or series configuration with similar or different batteries or circuits. In other words, several instances of battery 300 may be connected in series to in an effort to increase the open circuit voltage of the battery, for instance. Similarly, several instances of battery 300 may be connected in parallel to increase capacity (amp hours). In other embodiments, battery 300 may be connected in configurations involving other batteries. In an example embodiment, a plurality of instances of battery 300 may be configured in a planar array on the substrate. Battery 300 may also be arranged in a jelly roll-type or thin film-type configuration. Other arrangements and configurations are possible.

### III. Example Methods

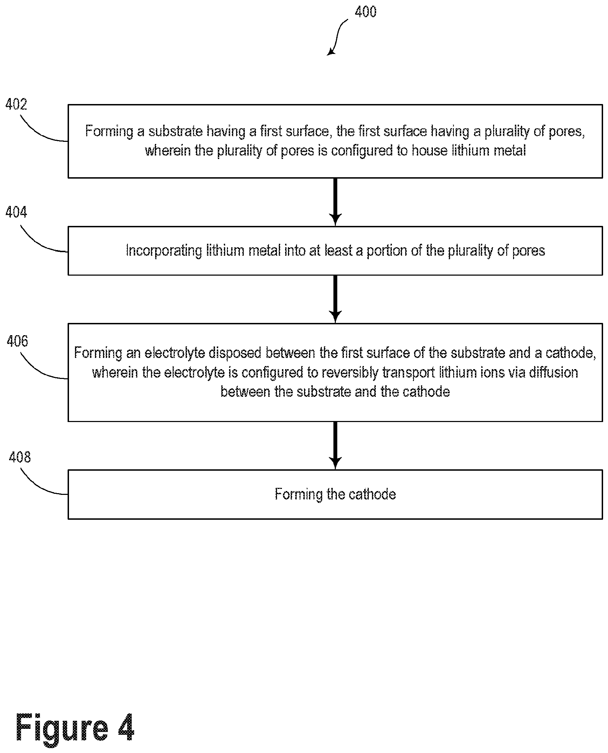

Figure 4 illustrates a method 400, according to an example described herein. The method 400 may include various blocks or steps. The blocks or steps may be carried out individually or in combination. The blocks or steps may be carried out in any order and/or in series or in parallel. Further, blocks or steps may be omitted or added to method 400.

The blocks of method 400 may be carried out to form or compose the elements of battery 300 as illustrated and described in reference to Figure 3.

Method 400 may describe a method of manufacturing a battery. Block 402 includes forming a substrate having a first surface, the first surface having a plurality of pores. The substrate may include the porous substrates as illustrated and described in reference to Figure 1. Additionally or alternatively, the substrate may include a sponge-like substrate as illustrated and described in reference to Figure 2.

The plurality of pores is configured to house lithium metal. For example, the plurality of pores may be arranged so as to reversibly exchange lithium metal with a cathode via an electrolyte in a battery configuration. Furthermore, the substrate material may include a material that is chemically and/or electrochemically stable in the presence of lithium metal. As described herein, the substrate may include an electrically-conductive material such as copper and/or nickel.

The plurality of pores may be formed via additive and/or subtractive fabrication processes. For example, the substrate material may be optionally oxidized via an oxidation furnace. Thereafter, the pores may be etched using wet chemical etch (e.g. hydrofluoric acid, HF) and/or a dry plasma etch (carbon tetrafluoride, CF₄) processes. In some embodiments, one or more lithography steps may be included to mask/protect some areas of the substrate during etch. Additionally or alternatively, the substrate may be embossed, imprinted, or otherwise modified to form the plurality of pores.

In another example embodiment, the porous portion of the substrate may be formed by adding substrate material around the pore volumes. For instance, at least the porous portion of the substrate may be formed via 3D printing, evaporation, or electroplating. Again, one or more lithography steps may be included, for example, to form the pore volumes. Additionally or alternatively, the substrate may be evaporated or electroplated into a diblock copolymer mold. The mold may thereafter be removed via subsequent copolymer etching and/or dissolving.

It is understood that many other fabrication techniques exist to form a porous portion in a metal, such as copper or nickel. All such other fabrication techniques are contemplated herein.

As described elsewhere herein, the plurality of pores may include a multi-layer, square lattice arrangement of pores. In such a scenario, the pores may have a center-to-center spacing of 100 micrometres. In some embodiments, the pores may have pore diameters between 1-10 micrometres.

Various pore configurations and arrangements are possible. For example, the plurality of pores may be disposed in a square lattice, a hexagonal close-packed lattice, or a pseudo-random, sponge-like arrangement. In yet further embodiments, the substrate may include a mesh structure.

Block 404 includes incorporating lithium metal into at least a portion of the plurality of pores. In an example embodiment, a lithium metal may be introduced into the pores of the substrate in a pre-lithiation process. The pre-lithiation process may be provided in various ways. For example, lithium metal may be electroplated into the pores via an electrochemical process. Namely, the substrate may be immersed in a lithium-containing solution. In such a scenario, an electrical field may be created between the solution and the substrate. Lithium metal may dissociate from the solution and become incorporated into the pores of the substrate.

Alternatively or additionally, lithium metal may be evaporated into the pores. For example, a lithium metal target may be a source for a RF sputtering, electron beam, thermal, or plasma-based evaporation system.

As another alternative, lithium metal may be deposited onto the substrate via a stabilized lithium metal powder (SLMP). In an example embodiment, the SLMP may be sprayed or otherwise deposited onto the first surface of the substrate. Further processing steps, such as physical pressure and/or heating/sintering may be provided. Other ways of incorporating lithium metal into the pores of the substrate are contemplated herein.

In some embodiments, a substrate pretreatment step may be provided before the incorporation of lithium into the plurality of pores. For example, the substrate may be cleaned with an organic solvent and/or a wet chemical (e.g. HF) etch. Other substrate preparation or cleaning processes are possible.

Block 406 includes forming an electrolyte disposed between the first surface of the substrate and a cathode. The electrolyte is configured to reversibly transport lithium ions via diffusion between the substrate and the cathode. In an example embodiment, the electrolyte includes a liquid electrolyte, such as a lithium salt (e.g. LiPF₆ or LiBF₄) dissolved in an organic solvent such as ethylene carbonate (EC), dimethyl carbonate (DMC), and/or diethyl carbonate (DEC).

In another example embodiment, the electrolyte may include a liquid solvent having a high-concentration of ether. In such a scenario, the electrolyte may further include lithium bis(fluorosulfonyl)imide (LiFSI) as a lithium salt. Other electrolyte materials are possible.

In some embodiments, a separator material may be interposed between the first surface of the substrate and the cathode. The separator may provide a physical barrier to prevent an electrical short between the substrate and the cathode. In such a scenario, the separator may be electrically-insulating and may be permeable so as to allow diffusion of lithium ions through it.

Block 408 includes forming the cathode. The cathode may be cathode 310 as illustrated and described in reference to Figure 3. In such a scenario, the cathode may include lithium cobalt oxide (LCO). However, other cathode materials are contemplated within the scope of the present disclosure.

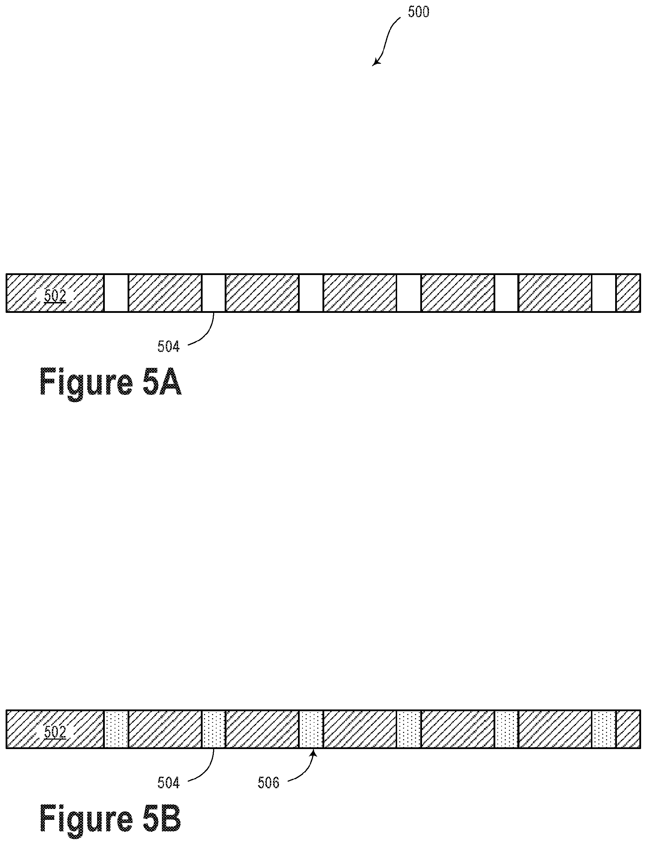

Figures 5A- 5E illustrate battery manufacturing scenario 500, according to an example. Battery manufacturing scenario 500 may include several steps or blocks that may be carried out in the order as illustrated. Alternatively, the steps or blocks may be carried out in a different order. Furthermore, steps or blocks may be added or subtracted within the scope of the present disclosure.

Figure 5A illustrates the formation of a substrate 502 having a plurality of pores 504. The pores 504 may pass all the way through substrate 502. Alternatively, the pores 504 need not pass all the way through the substrate 502. For example, pores 504 may represent dimples, channels, voids, spaces, meshes, or other three-dimensional openings on at least a first surface of the substrate 502. As described elsewhere herein, the surface 502 may include an electrically-conductive material, such as copper or nickel.

Figure 5B illustrates lithium metal 506 incorporated at least some of the plurality of pores 504. In an example, lithium metal 506 may be introduced into the plurality of pores 504 via an electroplating process. Other pre-lithiation process methods, such as SLMP deposition, are possible.

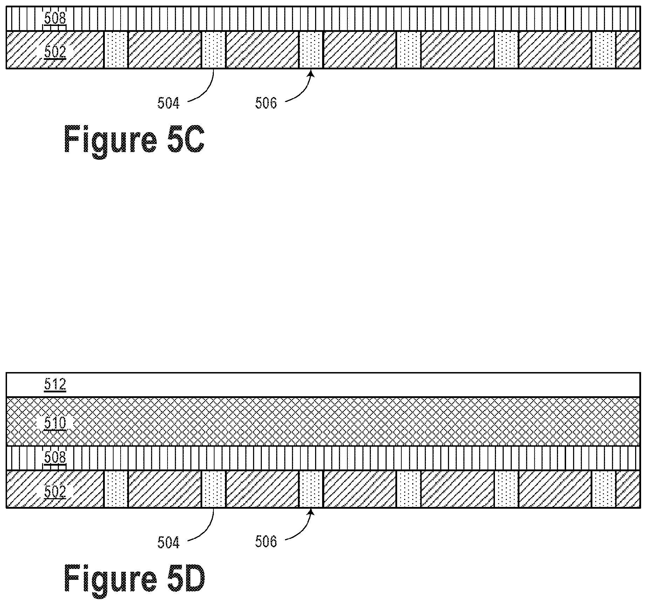

Figure 5C illustrates the formation of a separator 508 adjacent to the substrate 502. The separator 508 may include a fiber-based material (cotton, polyester, etc.). Alternatively, the separator 508 may include polyethylene or another polymer-based material. During manufacturing, a liquid electrolyte may be inserted or otherwise incorporated into the separator 508. The liquid electrolyte may be permeable to lithium ions, which may reversibly transit between the pores 504 of the substrate 502 and the cathode 510.

Figure 5D illustrates the formation of a cathode 510 adjacent to the separator 508. As described elsewhere, the cathode 510 may include lithium cobalt oxide (LCO).

Figure 5D also illustrates the formation of a top separator 512 adjacent to the cathode 510. The top separator 512 may act to encapsulate the battery. Furthermore, the top separator 512 may provide an electrically-insulating material such that a jelly-roll-type battery may be formed.

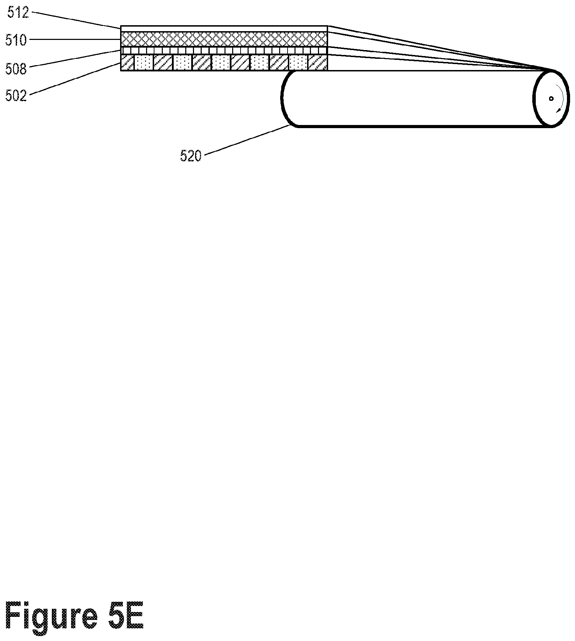

Figure 5E illustrates a jelly-roll-type battery scenario. In such a scenario, a stack that includes at least the substrate 502, separator 508, cathode 510, and top separator 512 may be rolled into a cylindrical "jelly-roll" 520. It is understood that the battery may be formed into other shapes via such techniques. Other "roll-to-roll" battery manufacturing techniques are contemplated.

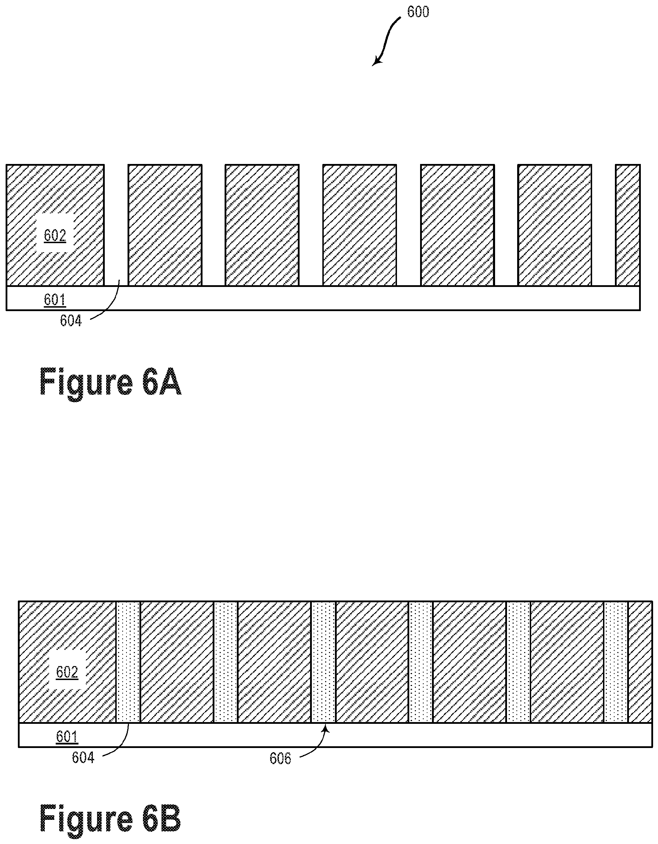

Figures 6A - 6F illustrate battery manufacturing scenario 600, according to an example embodiment. Specifically, battery manufacturing scenario 600 may illustrate a manufacturing process for a thin film-type battery. Figure 6A illustrates forming a substrate 602 on a support 601. Furthermore, Figure 6A illustrates the substrate 602 having a plurality of pores 604. As illustrated, the plurality of pores 604 may include cylindrical channels through the substrate 602. In such a scenario, the pores may be 10 micrometres in diameter, 50 micrometres in depth, and have a center-to-center spacing of 100 micrometres. However, other pore shapes, sizes, and arrangements are possible.

The support 601 may include a variety of materials. For example, support 601 may include one or more of: a silicon wafer, a plastic, a polymer, paper, fabric, glass, or a ceramic material. Other materials for support 601 are contemplated herein. Generally, support 601 may include any solid or flexible material that is sufficiently insulating so as to prevent a short circuit between the substrate 602 and the cathode 610.

Figure 6B illustrates lithium metal 606 incorporated into at least a portion of at least some of the plurality of pores 604. The lithium metal 606 may be introduced into the plurality of pores 604 via various methods described herein. Namely, the lithium metal 606 may be electroplated so as to be incorporated into the pores 604.

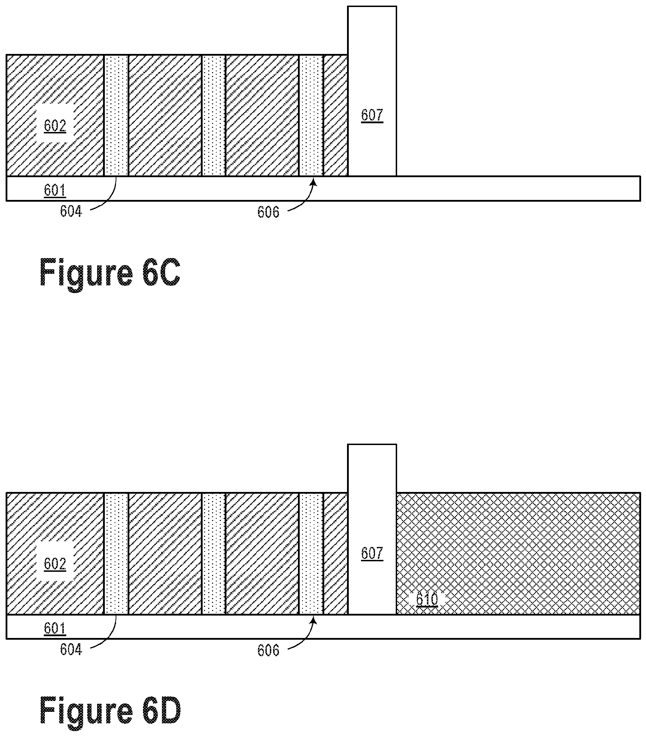

Figure 6C illustrates removing at least a portion of the substrate 602 and forming a spacer 607. Removing the portion of the substrate 602 may be performed by a mask and etch fabrication procedure. Other ways to remove the portion of the substrate 602 are possible. In an alternative embodiment, the substrate 602 may have been previously patterned (e.g. via masked substrate deposition). In such a case, the substrate 602 need not be removed.

The spacer 607 may include an insulating material that may be operable to prevent a short circuit between the substrate 602 and the cathode 610. The spacer 607 may include silicon carbide, silicon dioxide, or another insulating material that is non-reactive with lithium.

Figure 6D illustrates formation of the cathode 610. Namely, the cathode 610 may be deposited, grown, or otherwise formed adjacent to the spacer 607. As described herein, the cathode 610 may include lithium cobalt oxide (LCO). Other cathode materials are possible.

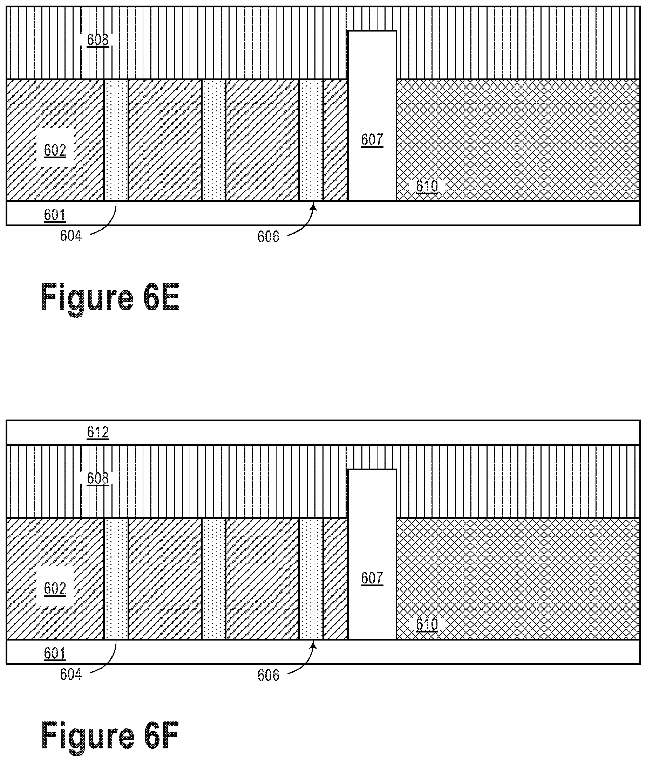

Figure 6E illustrates formation of an electrolyte 608 so as to bridge or otherwise connect at least the first surface of the substrate 602 and the cathode 610. In such a scenario, the electrolyte 608 may serve to provide a diffusion pathway for lithium ions to reversibly travel between the pores 604 of substrate 602 and the cathode 610.

In some embodiments, electrolyte 608 may include a solid electrolyte. For example, electrolyte 608 may include Li₂₊₂ₓZn₁₋ₓGeO₄ (LISICON). In an alternative embodiment, the electrolyte 608 may include lithium phosphorous oxynitride (LiPON). In some embodiments, the electrolyte 608 may be deposited by RF magnetron sputtering or PVD For example, PVD of electrolyte 608 may include exposing a target of lithium phosphate to plasma in a nitrogen environment. Alternatively or additionally, the electrolyte 608 may include a different material. The electrolyte 608 may have a layer thickness between 10-30 micrometres; however other electrolyte layer thicknesses are possible.

The electrolyte 608 may be able to conform to a shape of the underlying layers. In some embodiments, the electrolyte 608 may optionally include a gel and/or liquid electrolyte. In such scenarios, the battery may include a further insulating separator material that may incorporate the gel or liquid electrolyte.

Figure 6F illustrates an encapsulation layer 612 formed adjacent to the electrolyte 608. The encapsulation layer 612 may include a material configured to protect and stabilize the underlying elements of the battery. For example, the encapsulation layer 612 may include an inert material, an insulating material, a passivating material, and/or a physically- and/or chemically-protective material. In an embodiment, the encapsulation layer 612 may include a multilayer stack which may include alternating layers of a polymer (e.g. parylene, photoresist, etc.) and a ceramic material (e.g. alumina, silica, etc.) Additionally or alternatively, the encapsulation layer 612 may include silicon nitride (SiN). The encapsulation layer 612 may include other materials. In an example embodiment, the encapsulation layer 612 may be about 1 micrometre thick.

In an example embodiment, the battery may be configured in a stacked arrangement. That is, instances of battery illustrated in Figure 6F may be placed on top of one another. The encapsulation layer 612 may provide a planarization layer for a further support 601 and accompanying battery materials. Alternatively, the battery materials may be patterned directly on the encapsulation layer 612 without a further support 601. In such a way, multiple instances of the battery may be formed on top of one another.

It is understood that other battery elements may be included in some or all of the embodiments described herein. For example, embodiments may include a cathode current collector and/or a substrate current collector. Such current collectors may include a metal and may be 200-1000 nanometers thick. Other materials and thicknesses are possible.

While some embodiments described herein may include additive deposition techniques (e.g. blanket deposition, shadow-masked deposition, selective deposition, etc.), subtractive patterning techniques are additionally or alternatively possible. Subtractive patterning may include material removal after deposition onto the substrate or other elements of the battery. In an example embodiment, a blanket deposition of material may be followed by a photolithography process (or other type of lithography technique) to define an etch mask. The etch mask may include photoresist and/or another material such as silicon dioxide (SiO₂) or another suitable masking material.

The subtractive patterning process may include an etching process. The etch process may utilize physical and/or chemical etching of the battery materials. Possible etching techniques may include reactive ion etching, wet chemical etching, laser scribing, electron cyclotron resonance (ECR-RIE) etching, or another etching technique.

In an example embodiment, selective removal of a portion of any of a current collector, electrolyte, substrate, or cathode may include laser-scribing the respective portion of the collector, electrolyte, substrate, and cathode. That is, a blanket layer of the current collector, electrolyte, substrate, and/or cathode material may be deposited. Subsequently, a laser scribe may remove portions of the respective materials. The laser scribe may include a high-power laser configured to ablate or otherwise remove material from a surface. The laser light may be directed by an optical system according to a predetermined scribing pattern or mask pattern. Each of the current collector, electrolyte, substrate, and cathode may have an associated mask pattern to define the material to remove (and preserve) via laser scribing.

In some embodiments, material liftoff processes may be used. In such a scenario, a sacrificial mask or liftoff layer may be patterned on the substrate before material deposition. After material deposition, a chemical process may be used to remove the sacrificial liftoff layer and battery materials that may have deposited on the sacrificial liftoff layer. In an example embodiment, a sacrificial liftoff layer may be formed using a negative photoresist with a reentrant profile. That is, the patterned edges of the photoresist may have a cross-sectional profile that curves inwards towards the main volume of photoresist. Materials may be deposited to form, for instance, the anode and cathode current collectors. Thus, material may be directly deposited onto the substrate in areas where there is no photoresist. Additionally, the material may be deposited onto the patterned photoresist. Subsequently, the photoresist may be removed using a chemical, such as acetone. In such a fashion, the current collector material may be "lifted off' from areas where the patterned photoresist had been. Other methods of sacrificial material removal are contemplated herein.

The particular arrangements shown in the Figures should not be viewed as limiting. It should be understood that other embodiments may include more or less of each element shown in a given Figure. Further, some of the illustrated elements may be combined or omitted. Yet further, an illustrative embodiment may include elements that are not illustrated in the Figures.

While various examples and embodiments have been disclosed, other examples and embodiments will be apparent to those skilled in the art. The various disclosed examples and embodiments are for purposes of illustration and are not intended to be limiting, with the true scope being indicated by the following claims.

## Claims

1. A method of manufacturing a battery, the method comprising:
forming (402) a substrate (602) on a support (601), wherein the substrate (602) has a first surface, the first surface having a plurality of pores (604), wherein the plurality of pores (604) is configured to house lithium metal;
incorporating (404) lithium metal (606) into the plurality of pores (604);
removing at least a portion of the substrate (602) to expose a surface of the support (601) and an interface surface along the substrate (602);
forming a spacer (607) along at least a portion of the exposed surface of the support (601) and the interface surface, wherein the spacer (607) comprises an electrically-insulating material;
forming a cathode (610) adjacent to the spacer (607), such that the spacer (607) separates the cathode (610) from the substrate (602); and
forming an electrolyte (608) so as to connect the first surface of the substrate (602) and the cathode (610), wherein the electrolyte (608) is configured to reversibly transport lithium ions via diffusion between the substrate (602) and the cathode (610).

2. The method of claim 1, wherein forming the substrate (602) comprises etching the substrate (602) via a wet chemical etch.

3. The method of claim 1, wherein forming the substrate (602) comprises forming the plurality of pores (604) via electrochemical plating.

4. The method of claim 1, wherein incorporating the lithium metal comprises incorporating the lithium metal via an electrochemical plating process.

5. The method of claim 1, further comprising forming an encapsulation layer (612) on the electrolyte, wherein the encapsulation layer comprises at least one of a multilayer stack or silicon nitride.

6. A battery comprising:
a substrate (602) formed on a support (601), the substrate (602) comprising a first surface having a plurality of pores (604), wherein the plurality of pores is configured to house lithium metal, and at least a portion of the pores are filled at least partially with lithium metal (606);
a cathode (610);
a spacer (607) formed along at least a portion of the support (601) and an interface surface along the substrate (602) and adjacent to the cathode (610), wherein the spacer (607) separates the cathode (610) from the substrate (602) and comprises an electrically-insulating material;
an electrolyte (608) disposed so as to connect the first surface of the substrate (602) and the cathode (610), wherein the electrolyte is configured to reversibly transport lithium ions via diffusion between the plurality of pores and the cathode.

7. The method of claim 1 or the battery of claim 6, wherein the plurality of pores comprises a multi-layer square lattice arrangement of pores, wherein the pores have a center-to-center spacing of 100 micrometres.

8. The method of claim 1 or the battery of claim 6, wherein at least a portion of the plurality of pores have a pore diameter within a range between one and ten micrometres.

9. The method of claim 1 or the battery of claim 6, wherein at least a portion of the plurality of pores are disposed in a random or pseudo-random sponge-like arrangement.

10. The method of claim 1 or the battery of claim 6, wherein the substrate comprises an electrically-conductive material, wherein the electrically-conductive material comprises at least one of: copper, Cu, or nickel, Ni.

11. The method of claim 1 or the battery of claim 6, wherein the substrate comprises a mesh, wherein the mesh comprises at least one of copper, Cu, or nickel, Ni.

12. The method of claim 1 or the battery of claim 6, wherein the cathode comprises lithium cobalt oxide, LiCoO₂.

13. The method of claim 1 or the battery of claim 6, wherein the battery comprises a thin film-type battery.

14. The method of claim 1 or the battery of claim 6, wherein the substrate includes two or more layers of pores.

## Patentansprüche

1. Verfahren zum Herstellen einer Batterie, wobei das Verfahren umfasst:
Bilden (402) eines Substrats (602) auf einem Träger (601), wobei das Substrat (602) eine erste Oberfläche aufweist, wobei die erste Oberfläche eine Mehrzahl von Poren (604) aufweist, wobei die Mehrzahl von Poren (604) konfiguriert ist, um Lithiummetall aufzunehmen;
Einfügen (404) von Lithiummetall (606) in die Mehrzahl von Poren (604);
Entfernen von mindestens einem Teil des Substrats (602), um eine Oberfläche des Trägers (601) und eine Grenzfläche entlang des Substrats (602) freizulegen;
Bilden eines Abstandhalters (607) entlang mindestens eines Teils der freigelegten Oberfläche des Trägers (601) und der Grenzfläche, wobei der Abstandshalter (607) ein elektrisch isolierendes Material umfasst;
Bilden einer Kathode (610), welche an den Abstandshalter (607) angrenzt, sodass der Abstandshalter (607) die Kathode (610) von dem Substrat (602) trennt; und
Bilden eines Elektrolyten (608), um die erste Oberfläche des Substrats (602) mit der Kathode (610) zu verbinden, wobei der Elektrolyt (608) konfiguriert ist, um Lithium-Ionen durch Diffusion zwischen dem Substrat (602) und der Kathode (610) reversibel zu transportieren.

2. Verfahren nach Anspruch 1, wobei das Bilden des Substrats (602) das Ätzen des Substrats (602) über einen nassen chemischen Ätzvorgang umfasst.

3. Verfahren nach Anspruch 1, wobei das Bilden des Substrats (602) das Bilden der Mehrzahl von Poren (604) über elektrochemisches Plattieren umfasst.

4. Verfahren nach Anspruch 1, wobei das Einfügen des Lithiummetalls das Einfügen des Lithiummetalls über einen elektrochemischen Plattierungsvorgang umfasst.

5. Verfahren nach Anspruch 1, ferner umfassend das Bilden einer Einkapselungsschicht (612) auf dem Elektrolyten, wobei die Einkapselungsschicht mindestens eines von einem Mehrschichtstapel oder Siliziumnitrid umfasst.

6. Batterie, umfassend:
ein Substrat (602), welches auf einem Träger (601) gebildet ist, wobei das Substrat (602) eine erste Oberfläche umfasst, welche eine Mehrzahl von Poren (604) aufweist, wobei die Mehrzahl von Poren konfiguriert ist, um Lithiummetall aufzunehmen, und wobei mindestens ein Teil der Poren mindestens teilweise mit Lithiummetall (606) gefüllt sind;
eine Kathode (610);
einen Abstandshalter (607), welcher entlang mindestens eines Teils des Trägers (601) gebildet ist und eine Grenzfläche entlang des Substrats (602) und angrenzend an der Kathode (610), wobei der Abstandshalter (607) die Kathode (610) von dem Substrat (602) trennt und ein elektrisch isolierendes Material umfasst;
einen Elektrolyten (608), welcher angeordnet ist, um die erste Oberfläche des Substrats (602) mit der Kathode (610) zu verbinden, wobei der Elektrolyt konfiguriert ist, um Lithium-Ionen durch Diffusion zwischen der Mehrzahl von Poren und der Kathode reversibel zu transportieren.

7. Verfahren nach Anspruch 1 oder Batterie nach Anspruch 6, wobei die Mehrzahl von Poren eine mehrschichtige quadratische Gitteranordnung von Poren umfasst, wobei die Poren einen Abstand von Mittelpunkt zu Mittelpunkt von 100 Mikrometern aufweisen.

8. Verfahren nach Anspruch 1 oder Batterie nach Anspruch 6, wobei mindestens ein Teil der Mehrzahl von Poren einen Porendurchmesser innerhalb eines Bereichs zwischen eins und zehn Mikrometern aufweist.

9. Verfahren nach Anspruch 1 oder Batterie nach Anspruch 6, wobei mindestens ein Teil der Mehrzahl von Poren in einer zufälligen oder pseudo-zufälligen schwammartigen Anordnung angeordnet sind.

10. Verfahren nach Anspruch 1 oder Batterie nach Anspruch 6, wobei das Substrat ein elektrisch leitfähiges Material umfasst, wobei das elektrisch leitfähige Material mindestens eines von Kupfer, Cu, oder Nickel, Ni, umfasst.

11. Verfahren nach Anspruch 1 oder Batterie nach Anspruch 6, wobei das Substrat ein Netz umfasst, wobei das Netz mindestens eines von Kupfer, Cu, oder Nickel, Ni, umfasst.

12. Verfahren nach Anspruch 1 oder Batterie nach Anspruch 6, wobei die Kathode Lithiumkobaltoxid, LiCoO₂, umfasst.

13. Verfahren nach Anspruch 1 oder Batterie nach Anspruch 6, wobei die Batterie eine Dünnfilm-Batterie umfasst.

14. Verfahren nach Anspruch 1 oder Batterie nach Anspruch 6, wobei das Substrat zwei oder mehr Schichten von Poren umfasst.

## Revendications

1. Procédé de fabrication d'une batterie, le procédé comprenant :
la formation (402) d'un substrat (602) sur un support (601), dans lequel le substrat (602) présente une première surface, la première surface présentant une pluralité de pores (604), dans lequel la pluralité de pores (604) est configurée pour abriter du métal lithium ;
l'incorporation (404) de métal lithium (606) dans la pluralité de pores (604) ;
l'enlèvement d'au moins une partie du substrat (602) pour exposer une surface du support (601) et une surface d'interface le long du substrat (602) ;
la formation d'une entretoise (607) le long d'au moins une partie de la surface exposée du support (601) et de la surface d'interface, dans lequel l'entretoise (607) comprend un matériau électriquement isolant ;
la formation d'une cathode (610) adjacente à l'entretoise (607), de sorte que l'entretoise (607) sépare la cathode (610) du substrat (602) ; et
la formation d'un électrolyte (608) de façon à raccorder la première surface du substrat (602) et la cathode (610), dans lequel l'électrolyte (608) est configuré pour transporter de manière réversible des ions lithium par le biais d'une diffusion entre le substrat (602) et la cathode (610).

2. Procédé selon la revendication 1, dans lequel la formation du substrat (602) comprend la gravure du substrat (602) par une gravure chimique humide.

3. Procédé selon la revendication 1, dans lequel la formation du substrat (602) comprend la formation de la pluralité de pores (604) par un plaquage électrochimique.

4. Procédé selon la revendication 1, dans lequel l'incorporation du métal lithium comprend l'incorporation du métal lithium par le biais d'un processus de plaquage électrochimique.

5. Procédé selon la revendication 1, comprenant en outre la formation d'une couche d'encapsulation (612) sur l'électrolyte, dans lequel la couche d'encapsulation comprend au moins une d'une pile multicouches ou de nitrure de silicium.

6. Batterie comprenant :
un substrat (602) formé sur un support (601), le substrat (602) comprenant une première surface présentant une pluralité de pores (604), dans lequel la pluralité de pores est configurée pour abriter un métal lithium, et au moins une partie des pores sont remplis au moins partiellement de métal lithium (606) ;
une cathode (610) ;
une entretoise (607) formée le long d'au moins une partie du support (601) et une surface d'interface le long du substrat (602) et adjacente à la cathode (610), dans laquelle l'entretoise (607) sépare la cathode (610) du substrat (602) et comprend un matériau électriquement isolant ;
un électrolyte (608) disposé de façon à raccorder la première surface du substrat (602) et la cathode (610), dans laquelle l'électrolyte est configuré pour transporter de manière réversible des ions lithium par diffusion entre la pluralité de pores et la cathode.

7. Procédé selon la revendication 1, ou batterie selon la revendication 6, dans lesquels la pluralité de pores comprend un agencement de pores en maillage carré multicouches, dans lequel les pores présentent un espacement d'un centre à l'autre de 100 micromètres.

8. Procédé selon la revendication 1 ou batterie selon la revendication 6, dans lesquels au moins une partie de la pluralité de pores présente un diamètre de pore dans une plage comprise entre un et dix micromètres.

9. Procédé selon la revendication 1 ou batterie selon la revendication 6, dans lesquels au moins une partie de la pluralité de pores sont disposés selon un agencement semblable à une éponge aléatoire ou pseudo-aléatoire.

10. Procédé selon la revendication 1 ou batterie selon la revendication 6, dans lesquels le substrat comprend un matériau électriquement conducteur, dans lesquels le matériau électriquement conducteur comprend au moins un parmi le cuivre, Cu, ou le nickel, Ni.

11. Procédé selon la revendication 1 ou batterie selon la revendication 6, dans lesquels le substrat comprend une maille, dans lesquels la maille comprend au moins un parmi le cuivre, Cu ou le nickel, Ni.

12. Procédé selon la revendication 1 ou batterie selon la revendication 6, dans lesquels la cathode comprend de l'oxyde de lithium-cobalt, LiCoO₂.

13. Procédé selon la revendication 1 ou batterie selon la revendication 6, dans lesquels la batterie comprend une batterie de type à film mince.

14. Procédé selon la revendication 1 ou batterie selon la revendication 6, dans lesquels le substrat inclut deux couches de pores ou plus.
